# EUROPÄISCHE PATENTSCHRIFT

(11) **EP 1 738 262 B1**
(45) Veröffentlichungstag und Bekanntmachung des Hinweises auf die Patenterteilung: **18.06.2014**
(21) Anmeldenummer: 05730957.7
(22) Anmeldetag: 13.04.2005
(51) Int. Cl.: G06F 11/16, H04L 1/00

(54) **VERFAHREN UND STEUERUNGSSYSTEM ZUM ERKENNEN EINES FEHLERS BEI EINER VERARBEITUNG VON DATEN IN EINEM VERARBEITUNGSSYSTEM**
METHOD AND CONTROL SYSTEM FOR RECOGNISING AN ERROR WHEN PROCESSING DATA IN A PROCESSING SYSTEM
PROCEDE ET SYSTEME DE COMMANDE POUR RECONNAITRE UNE ERREUR LORS DU TRAITEMENT DE DONNEES DANS UN SYSTEME DE TRAITEMENT

(30) Priorität: 19.04.2004 DE 102004018858
(43) Veröffentlichungstag der Anmeldung: 03.01.2007
(73) Patentinhaber: Beckhoff Automation GmbH, 33415 Verl (DE)
(72) Erfinder: PRÜSSMEIER, Uwe, 32657 Lemgo (DE)
(74) Vertreter: Patentanwaltskanzlei WILHELM & BECK
(86) Internationale Anmeldenummer: PCT/EP2005/003852
(87) Internationale Veröffentlichungsnummer: WO 2005/101208

(56) Entgegenhaltungen:
- EP-A- 0 287 302
- EP-A- 0 744 693
- DE-A1- 19 532 639

## Beschreibung

Die Erfindung betrifft ein Verfahren zum Erkennen eines Fehlers bei einer Verarbeitung von Daten in einem Verarbeitungssystem zu einem Datenpaket. Die Erfindung betrifft weiterhin ein Verarbeitungssystem, in dem das Verfahren durchgeführt wird.

Bei Systemen zur Verarbeitung von sicherheitsrelevanten Daten werden häufig Daten zwei- oder mehrkanalig verarbeitet, d. h. die Daten werden voneinander getrennt auf unterschiedlichen Wegen mehrfach verarbeitet. Mehrkanaligkeit wird dabei in der Regel dadurch erreicht, indem dasselbe Verarbeitungsverfahren zwei- oder mehrfach auf verschiedenen Verarbeitungseinheiten durchgeführt wird, und die daraus erhaltenen Ergebnisse miteinander verglichen werden. Es wird angenommen, dass die Ergebnisse der einzelnen Verarbeitungsverfahren mit einer sehr hohen Wahrscheinlichkeit richtig berechnet wurden, wenn auf allen Wegen das identische Ergebnis erhalten wird. Dies schließt systematische und spontane Fehler der Hardware nahezu aus. Es ist sehr unwahrscheinlich, dass zwei nicht erkannte Defekte zu exakt dem identischen Ergebnis mit einem Fehler an der gleichen Stelle führen. Nur dann bliebe der Fehler unentdeckt.

Wenn die Verarbeitung jedoch in einem Verarbeitungssystem erfolgt, in dem die Verfahrensschritte aller Verarbeitungsverfahren seriell ausgeführt werden, beispielsweise in einem einzigen Mikroprozessor, kann man die Mehrkanaligkeit durch das mehrmalige serielle Verarbeiten der Daten in dem Mikroprozessor erreichen. Die Verarbeitung der Daten findet dann mehrfach zeitlich nacheinander statt. Insbesondere kann die mehrfache Verarbeitung der Daten in unterschiedlicher Weise durchgeführt werden, so dass beispielsweise ein Berechnungsalgorithmus unterschiedliche Einzelschritte durchführt, um bei fehlerfreier Verarbeitung der Daten zu identischen Ergebnissen zu gelangen.

Die so erhaltenen Ergebnisse werden nun auf Gleichheit überprüft. Es besteht ein Problem darin, insbesondere bei der Verarbeitung in einem einzigen Mikroprozessor, dass nicht sichergestellt werden kann, dass bei einem fehlerhaften Mikroprozessor bzw. bei einem fehlerhaften Verarbeitungssystem die ungleichen Ergebnisse aus der mehrkanaligen Verarbeitung nicht durch einen weiteren Fehler doch als korrekte Ergebnisse interpretiert werden und zur weiteren Verarbeitung freigegeben werden. Dies ist besonders problematisch, da es in der Regel nur wenige Verfahrensschritte sind, die zum Vergleichen der ermittelten Ergebnisse benötigt werden, um die Korrektheit der ermittelten Daten festzustellen. Wenn jedoch die Mehrkanaligkeit in einem einzigen Mikroprozessor realisiert wird, kann ein Fehler bei einem Verfahrensschritt in dem Mikroprozessor dazu führen, dass ungleiche Ergebnisse nicht als Tehler erkannt werden und die Verarbeitung der Daten fortgesetzt wird, obwohl der Mikroprozessor fehlerhaft ist.

In der Steuerungstechnik wird beispielsweise zur Übertragung von Daten ein Standard wie PROFISAFE verwendet, der ein spezielles Protokoll und ein spezielles Format der Nutzdaten vorgibt. Dadurch werden die zu übertragenden Daten gegen alle typischen Fehler einer beliebigen Übertragungsstrecke, wie beispielsweise Verfälschung und Vertauschung von Daten, gesichert. Die Daten werden mit einer gemeinsamen Datenrahmenadresse, einer Prüfsumme und einem Lebenszykluszähler versehen.

Bei Systemen, in denen die Mehrkanaligkeit beispielsweise in einem einzigen Mikroprozessor, d. h. in einer einzigen informationsverarbeitenden Einheit realisiert wird, kann nicht beweisbar sichergestellt werden, dass der Mikroprozessor bei Erkennen eines Fehlers die fehlerhaften Daten nicht weitergibt. Es ist jedoch in sicherheitsrelevanten Bereichen eine "Einfehlersicherheit" gefordert, bei der nachweislich die Verarbeitung gestoppt bzw. das Generieren und Bereitstellen von Daten angehalten wird, wenn ein einziger Fehler aufgetreten ist. Dies bedeutet, dass das System sich nachweisbar bei einem beliebigen Fehler immer in einem sicheren Zustand befinden muss, um eine Gefährdung von Personen ausschließen zu können. Wichtig ist hierbei, dass der Fehler vom System selbst erkannt wird und es sich selbst stillsetzt. Das verhindert, dass ein zweiter Fehler auftritt und zu einem unsicheren Zustand führen kann.

Aus NIKOLAIZIK, Jürgen; NKOLOV, Boris; WARLITZ, Joachim; Fehlertolerante Mikrocomputersysteme. Berlin: Verl, Technik 1990 S. 23 - 67. (ISBN: 3-341-00859-4) ist ein fehlertolerantes Mikrocomputersystem mit einer zentralen Verarbeitungseinheit bekannt, bei dem zur Fehlererkennung eine Datenverarbeitung mit zwei unterschiedlichen Programmen nacheinander durchgeführt wird, wobei die Ergebnisse verglichen werden, um einen Fehler festzustellen.

Aus der EP 0 744 693 A1 ist ein Verfahren und ein Verarbeitungssystem mit den Merkmalen des Oberbegriffs des Anspruchs 1 bzw. 7 bekannt, bei dem Ausgangsdaten und Prüfsumme über zwei getrennte Programmkanäle berechnet und die Ausgangsdaten und die Prüfsumme dann miteinander verschränkt werden, um im Datenempfänger dann Fehler feststellen zu können.

Aus der EP 0 287 302 A2 ist ein weiteres Fail-Safe-Verfahren bekannt, bei dem die über zwei parallele Rechner berechneten Prüfsummen und Ausgangsdaten miteinander verschränkt werden, um Fehler zu ermitteln.

In der DE 195 32 639 A1 ist eine einkanalige Übertragung eines Datenpakete mit einer von einem ersten Rechner berechneten Ausgangsdaten und von einem zweiten Rechner berechneten Prüfsumme bekannt.

Es ist Aufgabe der vorliegenden Erfindung, ein Verfahren zum Erkennen eines Fehlers bei einer Verarbeitung von Daten zu einem Datenpaket zur Verfügung zu stellen, das eine Einfehlersicherheit beim Durchführen der Verarbeitung in einem Verarbeitungssystem, in dem die Verarbeitungsschritte eines Verarbeitungsverfahrens seriell ausgeführt werden, zur Verfügung zu stellen. Es ist weiterhin Aufgabe der vorliegenden Erfindung ein Verarbeitungssystem zur Verarbeitung von Daten zu einem Datenpaket zur Verfügung zu stellen, bei dem ein Auftreten eines Fehlers zuverlässig erkannt werden kann.

Diese Aufgabe wird durch das Verfahren nach Anspruch 1, das Computerprogrammprodukt nach Anspruch 5, sowie durch die Steuerungssysteme nach Anspruch 6 gelöst.

Weitere vorteilhafte Ausgestaltungen der Erfindung sind in den abhängigen Ansprüchen angegeben.

Gemäß einem ersten Aspekt der vorliegenden Erfindung ist ein Verfahren zum Erkennen eines Fehlers bei einer Verarbeitung von Daten in einem Verarbeitungssystem zu einem Datenpaket, das Ausgangsdaten und ein Prüfdatum enthält, vorgesehen. Das Verarbeitungssystem führt Verfahrensschritte eines Verarbeitungsverfahrens seriell aus. Das Prüfdatum wird so gebildet, um die Gültigkeit der Ausgangsdaten zu bestätigen. Das Verfahren umfasst die Schritte: Bereitstellen von Eingangsdaten; Ermitteln der Ausgangsdaten abhängig von den Eingangsdaten gemäß einem ersten Verarbeitungsverfahren; Ermitteln des Prüfdatum gemäß einem zweiten Verarbeitungsverfahren abhängig von den Eingangsdaten, wobei das erste und das zweite Verarbeitungsverfahren nacheinander in dem Verarbeitungssystem ausgeführt werden und aufeinander abgestimmt sind, um bei gleichen Eingangsdaten die Ausgangsdaten bzw. das Prüfdatum so zu erzeugen, dass die Ausgangsdaten durch das Prüfdatum bestätigt werden können; und Erkennen eines Fehlers in dem Verarbeitungssystem, wenn die Gültigkeit der Ausgangsdaten durch das Prüfdatum nicht bestätigt werden kann.

Das erfindungsgemäße Verfahren hat den Vorteil, dass unabhängig voneinander das Prüfdatum und die Ausgangsdaten in dem Verarbeitungssystem ermittelt werden, wobei vermieden wird, dass die Ermittlung der Ausgangsdaten zweifach oder mehrfach auf die gleiche Weise durchgeführt wird, um einen möglichen Fehler aufzufinden. Das mehrmalige Durchführen des gleichen Verarbeitungsverfahrens zur Ermittlung der Ausgangsdaten in einem einzigen Verarbeitungssystem wäre es in der Regel nicht möglich einen vorliegenden Fehler des Verarbeitungssystems zu erkennen, da der Fehler die gleichen Verarbeitungsverfahren auf gleiche Weise negativ beeinflussen würde. Dadurch, dass zwei verschiedene, nämlich das erste und das zweite Verarbeitungsverfahren verwendet werden, die voneinander unterschiedliche Werte berechnen, nämlich die Ausgangsdaten und das Prüfdatum, führt ein Fehler in dem Verarbeitungssystem dazu, dass die in dem ersten Verarbeitungsverfahren ermittelten Ausgangsdaten und das in dem zweiten Verarbeitungsverfahren ermittelten Prüfdatum nicht aufeinander abgestimmt sind, d. h. dass das Prüfdatum die Gültigkeit der Ausgangsdaten nicht bestätigen kann.

Vorzugsweise werden als das Prüfdatum die Prüfsumme der Ausgangsdaten ermittelt.

Es kann vorgesehen sein, dass das Ermitteln des Prüfdatums gemäß dem zweiten Verarbeitungsverfahren durchgeführt wird, indem zunächst Zwischen-Ausgangsdaten gemäß einem dritten Verarbeitungsverfahren und aus den ermittelten Zwischen-Ausgangsdaten gemäß einem vierten Verarbeitungsverfahren ein Prüfdatum ermittelt wird. Das dritte Verarbeitungsverfahren und das erste Verarbeitungsverfahren ermitteln dabei die Ausgangsdaten bzw. Zwischen-Ausgangsdaten auf unterschiedlichen Wegen. Insbesondere kann das erste Verarbeitungsverfahren bezüglich dem dritten Verarbeitungsverfahren mit inverser Logik durchgeführt werden. Dadurch wird erreicht, dass das erste und das dritte Verarbeitungsverfahren nicht die gleichen Verfahrensschritte beinhalten, so dass bei Auftreten eines Fehlers in einem Verfahrensschritt durch beide Verarbeitungsverfahren unterschiedliche Ausgangsdaten erzeugt werden. Somit würde das auf Grundlage der Zwischen-Ausgangsdaten ermittelte Prüfdatum gemäß dem vierten Verarbeitungsverfahren nicht die Gültigkeit der Ausgangsdaten bestätigen. Dadurch kann ein Fehler zuverlässig erkannt werden.

Gemäß einer bevorzugten Ausführungsform ist vorgesehen, dass das Prüfdatum unmittelbar nach dem Ermitteln der Zwischen-Ausgangsdaten ermittelt wird, wobei nach dem Ermitteln des Prüfdatums die Zwischen-Ausgangsdaten verworfen werden. Auf diese Weise wird erreicht, dass die Zwischen-Ausgangsdaten nicht gemeinsam mit den Prüfdaten in beispielsweise einem Speicher des Verarbeitungssystems vorliegen, so dass ein fehlerhaftes Weiterleiten eines aus den Zwischen-Ausgangsdaten und dem Prüfdatum gebildeten Datenpakets vermieden werden kann. Dadurch, dass die Zwischen-Ausgangsdaten in dem Verarbeitungssystem nicht oder nur kurzzeitig zur Verfügung stehen, ist ein Weiterreichen der Zwischen-Ausgangsdaten als Ausgangsdaten, z. B. aufgrund eines Fehlers des Verarbeitungssystems sehr unwahrscheinlich bzw. nahezu ausgeschlossen.

Gemäß einer Ausführungsform der Erfindung können aus den Ausgangsdaten und dem Prüfdatum eine Datenpaket gebildet werden, wobei nach einem Übertragen des Datenpakets überprüft wird, ob das Prüfdatum die Gültigkeit der Ausgangsdaten bestätigt, um die Gültigkeit des Datenpakets zu überprüfen.

Gemäß einem weiteren Aspekt der vorliegenden Erfindung ist ein Verarbeitungssystem zum Erkennen eines Fehlers bei dem Verarbeiten von Daten zu einem Datenpaket vorgesehen. Das Verarbeitungssystem weist eine Verarbeitungseinheit auf, um Verarbeitungsschritte eines Verarbeitungsverfahrens seriell auszuführen, um Ausgangsdaten abhängig von Eingangsdaten gemäß einem ersten Verarbeitungsverfahren zu ermitteln, und um ein Prüfdatum abhängig von den Eingangsdaten gemäß einem zweiten Verarbeitungsverfahren zu ermitteln. Es ist weiterhin ein Speicher vorgesehen, indem die Verfahrensschritte des ersten und zweiten Verarbeitungsverfahrens gespeichert sind, um diese mit Hilfe der Verarbeitungseinheit auszuführen. Das erste und das zweite Verarbeitungsverfahren werden nacheinander in dem Verarbeitungssystem ausgeführt und sind so aufeinander abgestimmt, um bei gleichen Eingangsdaten die Ausgangsdaten und das Prüfdatum so zu erzeugen, dass die Gültigkeit der Ausgangsdaten durch das Prüfdatum bestätigt werden kann. Es ist ferner eine Fehlerermittlungseinheit vorgesehen, um einem Fehler zu erkennen, wenn das Ausgangsdatum durch das Prüfdatum nicht bestätigt werden kann.

Gemäß einer weiteren Ausführungsform der vorliegenden Erfindung ist eine Übertragungseinheit vorgesehen, um das Prüfdatum und die Ausgangsdaten zu einem Datenpaket zu verbinden und dieses über ein Netzwerk zu übermitteln.

Bevorzugte Ausführungsformen der Erfindung werden nachfolgend mit Bezug auf die beigefügten Zeichnungen näher erläutert. Es zeigen:
In Figur 1 ist ein Steuerungssystem zur Steuerung einer Maschine über einen PROFIBUS gezeigt, indem das erfindungsgemäße Verfahren implementiert ist;
In Figur 2 ist ein Flussdiagramm zur Darstellung einer bevorzugten Ausführungsform des erfindungsgemäßen Verfahrens dargestellt.

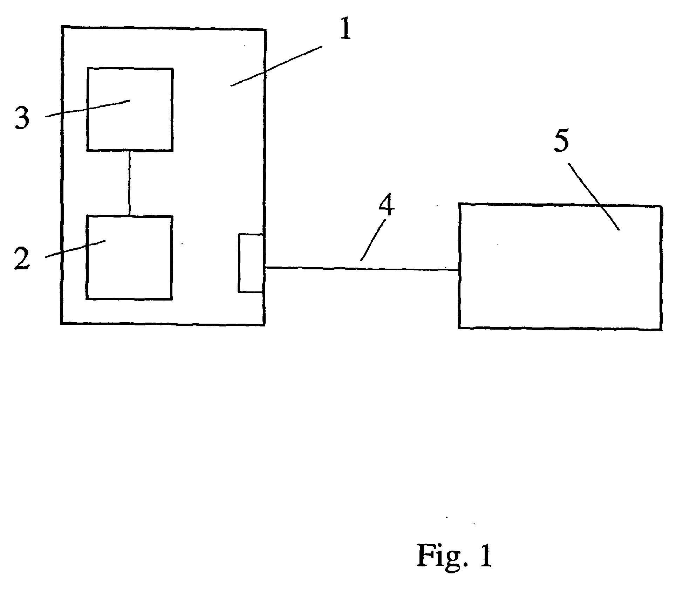

Figur 1 zeigt ein Steuerungssystem 1 mit einem Mikroprozessor 2 und einem Speicher 3. Der Speicher 3 dient dazu, Programm- und Nutzdaten zu speichern. Mithilfe der Programmdaten kann der Mikroprozessor 2 ein Verarbeitungsverfahren auf die Nutzdaten, die in dem Speicher 3 gespeichert sind, ausführen. Der Mikroprozessor 2 ist beispielsweise ein Standard-Mikroprozessor, der die Verfahrensschritte des Verarbeitungsverfahrens seriell ausführt.

Das Steuerungssystem 1 ist über einen PROFIBUS 4 mit einer Maschine 5 verbunden, die von dem Steuerungssystem 1 gesteuert werden soll. Über den PROFIBUS 4 werden Datenpakete übertragen, die auch Steuerdaten und Prüfdaten enthalten. Die Steuerdaten sind Ergebnisse eines ersten Verarbeitungsverfahrens, das in dem Mikroprozessor 2 ausgeführt wird. Die Prüfdaten werden gemäß einem zweiten Verarbeitungsverfahren ebenfalls in dem Mikroprozessor 2 ermittelt und dienen dazu, beim Empfänger, d. h. in der Maschine 5, die Steuerdaten hinsichtlich ihrer Gültigkeit zu überprüfen, d. h. die Prüfdaten und die Steuerdaten müssen aufeinander abgestimmt sein. In der Regel lassen sich die Prüfdaten aus den Steuerdaten in einfacher Weise ermitteln, z. B. durch Prüfsummenbildung.

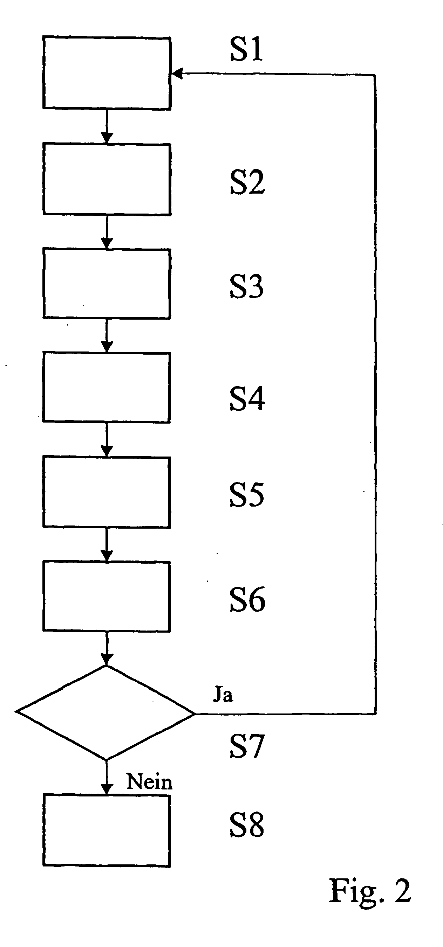

in Figur 2 ist ein Flussdiagramm gezeigt, dass eine bevorzugte Ausführungsform für ein Verarbeitungsverfahren gemäß der Erfindung dargestellt. Aus bereit gestellten Eingangsdaten (Schritt S1) werden zunächst Ausgangsdaten abhängig von den Eingangsdaten gemäß einem ersten Verarbeitungsverfahren in Schritt S2 ermittelt. Anschließend wird in einem dritten Verarbeitungsverfahren aus den Eingangsdaten Zwischen-Ausgangsdaten ermittelt (Schritt S3), wobei das erste und das dritte Verarbeitungsverfahren im Wesentlichen die gleiche Funktion realisieren, wobei die Ausgangsdaten zweckmäßigerweise auf unterschiedlichen Wegen erhalten werden. Beispielsweise verwendet das erste Verarbeitungsverfahren positive Logik und das dritte Verarbeitungsverfahren negative Logik um die Ausgangsdaten zu erhalten.

Die Ausgangsdaten, die mit Hilfe des ersten Verarbeitungsverfahren und die Zwischen-Ausgangsdaten, die mithilfe des dritten Verarbeitungsverfahrens erhalten werden, sind bei fehlerloser Betriebsweise des Steuerungssystems identisch. Tritt bei einer fehlerhaften Ausführung eines bestimmten Verarbeitungsschrittes in dem ersten oder dritten Verarbeitungsverfahren ein Fehler auf, erhält man unterschiedliche Ausgangsdaten aus dem ersten Verarbeitungsverfahren und aus dem dritten Verarbeitungsverfahren. Aus den Zwischen-Ausgangsdaten wird in einer Prüfsummenberechnung gemäß Schritt S4 eine Prüfsumme bezüglich der Zwischen-Ausgangsdaten berechnet. Bei der fehlerlosen Abarbeitung des ersten Verarbeitungsverfahren sowie des dritten Verarbeitungsverfahrens und der Prüfsummenberechnung entspricht die in Schritt S4 ermittelte Prüfsumme einer Prüfsumme der in Schritt S2 ermittelten Ausgangsdaten.

Um zu vermeiden, dass die Zwischen-Ausgangsdaten und die Prüfsumme als gemeinsames Datenpaket bzw. in definierter Zuordnung zueinander in dem Speicher 3 zur Verfügung stehen und fehlerhafter Weise durch das Steuerungssystem 1 gesendet werden, werden vorzugsweise nach der Abarbeitung des Schritts S3 die Zwischen-Ausgangsdaten nicht in dem Speicher 3 gespeichert, sondern lediglich in Registern des Mikroprozessor oder in einem von dem Speicher 3 getrennten Cache-Speicher oder dergleichen zwischengespeichert und nach dem Ermitteln der Prüfsumme in Schritt S4 verworfen, so dass diese zu keiner Zeit in dem Speicher 3 vorliegen. Auf diese Weise wird gewährleistet, dass in dem Speicher 3 lediglich die Prüfsumme der gemäß dem dritten Verarbeitungsverfahren ermittelten Zwischen-Ausgangsdaten zur Verfügung steht und nicht die Zwischen-Ausgangsdaten selbst.

Da das erste Verarbeitungsverfahren auf einem unterschiedlichen Weg zu den Ausgangsdaten gelangt, können nur bei einer fehlerlosen Verarbeitung die Ausgangsdaten und die Prüfsumme zueinander passen, d. h. die Prüfsumme bestätigt die Gültigkeit der Ausgangsdaten nur dann, wenn die Abarbeitung der Verarbeitungsverfahren fehlerlos erfolgt ist.

Die Prüfsumme und die Ausgangsdaten werden in einem Schritt S5 miteinander in ein Datenpaket verbunden und können nun über den PROFIBUS 4 gemäß Schritt S6 an die zu betreibende Maschine 5 gesendet werden. Die Maschine 5 stellt in Schritt S7 fest, ob die Prüfsumme zu den Ausgangsdaten passt, d. h. ob die Prüfsumme die Gültigkeit der Ausgangsdaten bestätigt. Wenn ja wird zu Schritt S1 zurückgesprungen.

Wird ein Fehler festgestellt, so kann die Maschine 5 diesen Fehler über den PROFIBUS 4 an das Steuerungssystem 1 übermitteln, so dass dieses sich selbsttätig abschaltet bzw. die Verarbeitung anhält. Alternativ kann die Maschine 5 bei Eintreffen eines fehlerhaften Datenpaketes das Empfangen von weiteren Datenpaketen von dem Steuerungssystem 1 blockieren und sich selbst stillsetzen.

Vorzugsweise kann das Überprüfen, ob die Prüfsumme die Ausgangsdaten bestätigt, in dem Steuerungssystem 1 mit Hilfe des selben Mikroprozessors 2 durchgeführt werden, so dass das Steuerungssystem 1 sich selbst gemäß Schritt S8 stillsetzt, wenn ein Fehler aufgetreten ist.

Das Steuerungssystem 1 benutzt als Schnittstelle ein nach Außen gesichertes Protokoll, wie z. B. PROFISAFE mit dem der PROFIBUS 4 betrieben werden kann. Die Daten werden dabei in einem Rahmen mit unterschiedlichen Sicherungsmechanismen verpackt. Die Gültigkeit der Steuerdaten wird durch eine abschließende Prüfung des Rahmens des PROFISAFE-Protokolls durchgeführt. Ist die Prüfung fehlerfrei, können die Datenpakete freigegeben werden und versendet werden. Im Fehlerfall wird das Steuerungssystem 1 angehalten. Sollte ein Fehler im Steuerungssystem 1 zu falschen Teilergebnissen führen und weiterhin das Senden nicht verhindern, kann der Empfänger der Daten, d. h. die Maschine 5 bei der Prüfung des verwendeten Sicherungsrahmens den Fehler feststellen und entsprechend reagieren, z. B. indem sie die weitere Versendung von fehlerhaften Datenpaketen durch das Steuerungssystem 1 verhindert.

Das erste Verarbeitungsverfahren und das dritte Verarbeitungsverfahren sind vorzugsweise in inverser Logik aufgeführt, so dass vermieden wird, dass identische Verfahrensschritte zu gleichen fehlerhaften Ausgangsdaten führen. Es ist auch möglich, dass das erste und das dritte Verarbeitungsverfahren auf weitestgehend unterschiedliche Weise die gleiche Funktion ausführen. Dies lässt sich mithilfe von mathematischen Umformungsverfahren erreichen, mit denen dieselbe Funktion in verschiedener Weise implementiert werden kann.

Es ist auch möglich, das Prüfdatum, z. B. in Form der Prüfsumme direkt aus den Eingangsdaten zu berechnen, ohne zuvor die Zwischen-Ausgangsdaten zu ermitteln. Dies hat den Vorteil, dass die Zwischen-Ausgangsdaten zu keiner Zeit in dem Steuerungssystem zur Verfügung stehen, so dass die Zwischen-ausgangsdaten nicht fälschlicher Weise mit den Prüfdatum verbunden werden können und beispielsweise in fehlerhafter Weise als Datenpaket über den PROFIBUS 4 gesendet werden können.

Dies ist vor allem dann möglich, wenn die Prüfdatenberechnung sich mit der Funktion des ersten Verarbeitungsverfahrens zu einem neuen Verarbeitungsverfahren mit anderen Verfahrensschritten verbinden lässt, bei dem möglichst wenige, und insbesondere keine Verarbeitungsschritte mit dem ersten Verarbeitungsverfahren identisch sind.

## Patentansprüche

1. Verfahren zum Erkennen eines Fehlers bei einer Verarbeitüng von Eingangsdaten in einem Verarbeitungssystem (1) zu einem Datenpaket, das Ausgangsdaten und ein Prüfdatum enthält, wobei das Prüfdatum gebildet wird, um die Gültigkeit der Ausgangsdaten zu bestätigen, wobei die folgenden Verfahrensschritte seriell ausgeführt werden:
- Ermitteln der Ausgangsdaten abhängig von den Eingangsdaten gemäß einem ersten Verarbeitungsverfahren;
- Ermitteln des Prüfdatums abhängig von den Eingangsdaten gemäß einem zweiten Verarbeitungsverfahren, wobei Zwischen-Ausgangsdaten abhängig von den Eingangsdaten gemäß einem dritten Verarbeitungsverfahren ermittelt werden und aus den ermittelten Zwischen-Ausgangsdaten gemäß einem vierten Verarbeitungsverfahren ein Prüfdatum bestimmt wird, wobei das erste Verarbeitungsverfahren und das dritte Verarbeitungsverfahren die gleiche Funktion auf unterschiedlichen Wegen realisiert;
- Verbinden der Ausgangsdaten und des Prüfdatums miteinander in einem Datenpaket; und
- Erkennen eines Fehlers in dem Verarbeitungssystem, wenn die Gültigkeit der Ausgangsdaten durch das Prüfdatum nicht bestätigt werden kann;
**dadurch gekennzeichnet, dass** das Bestimmen des Prüfdatum gemäß dem vierten Verarbeitungsverfahren unmittelbar auf das Ermitteln der Zwischen-Ausgangsdaten erfolgt und die Zwischen-Ausgangsdaten danach verworfen werden.

2. Verfahren nach Anspruch 1, **dadurch gekennzeichnet, dass** als das Prüfdatum die Prüfsumme der Ausgangsdaten ermittelt wird.

3. Verfahren nach Anspruch 1 oder 2, **dadurch gekennzeichnet, dass** das erste Verarbeitungsverfahren bezüglich dem dritten Verarbeitungsverfahren mit inverser Logik durchgeführt wird.

4. Verfahren nach einem der Ansprüche 1 bis 3, **dadurch gekennzeichnet, dass** nach einem Übertragen des aus den Ausgangsdaten und dem Prüfdatum gebildeten Datenpakets überprüft wird, ob das Prüfdatum gemäß des zweiten Verarbeitungsverfahrens aus den Ausgangsdaten ermittelbar ist, um die Gültigkeit des Datenpakets zu überprüfen.

5. Computerprogrammprodukt zur Durchführung des Verfahrens nach einem der Ansprüche 1 bis 4 in einem Mikroprozessor.

6. Verarbeitungssystem (1) zum Erkennen eines Fehlers bei dem Verarbeiten von Eingangsdaten zu einem Datenpaket, das Ausgangsdaten und ein Prüfdatum zur Bestätigung der Gültigkeit der Ausgangsdaten enthält,
mit einer Verarbeitungseinheit (2), um Verarbeitungsschritte seriell auszuführen und um dabei die Ausgangsdaten abhängig von den Eingangsdaten gemäß einem ersten Verarbeitungsverfahren zu ermitteln und das Prüfdatum abhängig von den Eingangsdaten gemäß einem zweiten Verarbeitungsverfahren zu bestimmen, wobei beim Bestimmen des Prüfdatums Zwischen-ausgangsdaten abhängig von den Eingangsdaten gemäß einem dritten Verarbeitungsverfahren ermittelt werden und aus den ermittelten Zwischen-Ausgangsdaten gemäß einem vierten Verarbeitungsverfahren ein Prüfdatum bestimmt wird, wobei das erste Verarbeitungsverfahren und das dritte Verarbeitungserfahren die gleiche Funktion auf unterschiedlichen Wegen realisiert, und
mit einem Speicher (3), in dem die Verfahrensschritte der ersten und zweiten Verarbeitungsverfahren gespeichert sind, wobei ein Empfänger (5) des aus den Ausgangsdaten und dem Prüfdatum gebildeten Datenpakets einen Fehler in dem Verar beitungssystem (1) erkennt, wenn die Gültigkeit der Ausgangsdaten durch das Prüfdatum nicht bestätigt werden kann,
**dadurch gekennzeichnet, dass**
die Verarbeitungseinheit (2) das Prüfdatum gemäß dem vierten Verarbeitungsverfahren unmittelbar nach dem Ermitteln der Zwischen-Ausgangsdaten ermittelt und die Zwischen-Ausgangsdaten danach verwirft.

7. Verarbeitungssystem (1) nach Anspruch 6, **dadurch gekennzeichnet, dass** eine Übertragungseinheit (4) zum Empfänger (5) vorgesehen ist, um das aus dem Prüfdatum und den Ausgangsdaten gebildete Datenpaket zu übermitteln.

## Claims

1. A method for recognizing a fault when processing input data in a processing system (1) to form a data packet which contains output data and a test data item, the test data item being formed in order to confirm the validity of the output data, wherein the following method steps are executed serially:
- the output data are ascertained on the basis of the input data in line with a first processing method;
- the test data item is ascertained on the basis of the input data in line with a second processing method, with intermediate output data being ascertained on the basis of the input data in line with a third processing method, and a test data item being determined from the ascertained intermediate output data in line with a fourth processing method, wherein the first processing method and the third processing method implement the same function by different routes;
- the output data and the text data item are connected to each other in a data packet; and
- a fault is recognized in the processing system if the validity of the output data cannot be confirmed by the test data item;
**characterized in that**
in line with the fourth processing method, ascertaining the test data item is executed immediately upon ascertaining the intermediate output data and the intermediate output data are thereafter discarded.

2. The method of claim 1, **characterized in that** the test data item ascertained is the checksum for the output data.

3. The method of claim 1 or 2, **characterized in that** the first processing method is carried out with inverse logic in respect of the third processing method.

4. The method of any one of claims 1 to 3, **characterized in that** a transmission of the data packet formed from the output data and the test data item is followed by a check to determine whether the test data item can be ascertained from the output data in line with the second processing method in order to check the validity of the data packet.

5. A computer program product for executing the method of any one of claims 1 to 4 by means of a microprocessor.

6. A processing system (1) for recognizing a fault when processing input data to form a data packet which contains output data and a test data item for confirming the validity of the output data,
having a processing unit (2) for the purpose of executing processing steps serially and in so doing ascertaining the output data on the basis of the input data in line with a first processing method and determining the test data item on the basis of the input data in line with a second processing method, wherein determining the test data item involves intermediate output data being ascertained on the basis of the input data in line with a third processing method and determining a test data item from the ascertained intermediate output data in line with a fourth processing method, the first processing method and the third processing method implementing the same function by different routes, and
having a memory (3) which stores the method steps from the first and second processing methods,
wherein a receiver (5) of the data packet formed from the output data and the test data item recognizes a fault in the processing system (1) if the validity of the output data cannot be confirmed by the test data item,
**characterized in that**
in line with the fourth processing method, the processing unit (2) ascertains the test data item immediately upon ascertaining the intermediate output data and thereafter discards the intermediate output data.

7. The processing system (1) of claim 6, **characterized in that** a transmission unit (4) for the receiver (5) is provided for the purpose of transmitting the data packet formed from the test data item and the output data.

## Revendications

1. Procédé de détection d'une erreur lors d'un traitement de données d'entrée dans un système de traitement (1) en un paquet de données qui contient des données de sortie et une date de contrôle, la date de contrôle étant formée pour confirmer la validité des données de sortie, les étapes de procédé suivantes étant exécutées en série :
- détermination des données de sortie en fonction des données d'entrée conformément à un premier procédé de traitement ;
- détermination de la date de contrôle en fonction des données d'entrée conformément à un deuxième procédé de traitement, des données de sortie intermédiaires étant déterminées en fonction des données d'entrée conformément à un troisième procédé de traitement et une date de contrôle étant définie à partir des données de sortie intermédiaires déterminées conformément à un quatrième procédé de traitement, le premier procédé de traitement et le troisième procédé de traitement réalisant la même fonction par des voies différentes ;
- combinaison des données de sortie et de la date de contrôle ensemble en un paquet de données ; et
- détection d'une erreur dans le système de traitement lorsque la validité des données de sortie ne peut pas être confirmée par la date de contrôle ; **caractérisé en ce que** la définition de la date de contrôle conformément au quatrième procédé de traitement est effectuée directement après la détermination des données de sortie intermédiaires et les données de sortie intermédiaires sont ensuite rejetées.

2. Procédé selon la revendication 1, **caractérisé en ce que** la date de contrôle déterminée est la somme de contrôle des données de sortie.

3. Procédé selon la revendication 1 ou 2, **caractérisé en ce que** le premier procédé de traitement est mis en oeuvre avec une logique inverse par rapport au troisième procédé de traitement.

4. Procédé selon l'une des revendications 1 à 3, **caractérisé en ce qu'**après la transmission du paquet de données formé par les données de sortie et la date de contrôle, un contrôle est effectué pour vérifier si la date de contrôle peut être déterminée d'après les données de sortie conformément au deuxième procédé de traitement afin de contrôler la validité du paquet de données.

5. Produit programme informatique pour mettre en oeuvre le procédé selon l'une des revendications 1 à 4 dans un microprocesseur.

6. Système de traitement (1) pour détecter une erreur lors du traitement de données d'entrée en un paquet de données qui contient des données de sortie et une date de contrôle pour confirmer la validité des données de sortie,
comprenant une unité de traitement (2) pour exécuter en série des étapes de traitement et pour déterminer ainsi les données de sortie en fonction des données d'entrée conformément à un premier procédé de traitement et définir la date de contrôle en fonction des données d'entrée conformément à un deuxième procédé de traitement, des données de sortie intermédiaires étant déterminées en fonction des données d'entrée conformément à un troisième procédé de traitement lors de la définition de la date de contrôle et une date de contrôle étant définie à partir des données de sortie intermédiaires déterminées conformément à un quatrième procédé de traitement, le premier procédé de traitement et le troisième procédé de traitement réalisant la même fonction par des voies différentes, et
comprenant une mémoire (3) dans laquelle sont enregistrées les étapes de procédé du premier procédé de traitement et du deuxième procédé de traitement, un récepteur (5) du paquet de données formé par les données de sortie et la date de contrôle détectant une erreur dans le système de traitement (1) lorsque la validité des données de sortie ne peut pas être confirmée par la date de contrôle,
**caractérisé en ce que** l'unité de traitement (2) détermine la date de contrôle conformément au quatrième procédé de traitement directement après la détermination des données de sortie intermédiaires et rejette ensuite les données de sortie intermédiaires.

7. Système de traitement (1) selon la revendication 6, **caractérisé en ce qu'**il est prévu une unité de transmission (4) vers le récepteur (5) afin de communiquer le paquet de données formé par la date de contrôle et les données de sortie.
